# EUROPÄISCHE PATENTANMELDUNG

(11) **EP 2 682 718 A1**
(43) Veröffentlichungstag der Anmeldung: **08.01.2014**
(21) Anmeldenummer: 12175130.9
(22) Anmeldetag: 05.07.2012
(51) Int. Cl.: G01D 5/347

(54) **Verfahren zum Erfassen einer Absolutcodierung einer optischen Codespur**

(71) Anmelder: Hexagon Technology Center GmbH, 9435 Heerbrugg (CH)
(72) Erfinder: Vokinger, Urs, 9434 Au (CH); Lippuner, Heinz, 9445 Rebstein (CH)
(74) Vertreter: Gyaja, Christoph Benjamin

(57) **Zusammenfassung**

Die Erfindung betrifft ein Verfahren zum Erfassen einer Absolutcodierung (10), verkörpert durch Codeelemente (100, 100') einer optischen Codespur (1), mit einem Beleuchten der Absolutcodierung (10) mit Licht (21), einem Modulieren eines Teil des beleuchtenden Lichts (21) an Codeelementen (100, 100'), einem Erfassen der Absolutcodierung (10) als moduliertes Licht (21') und einem kontinuierlich variierenden Modulieren des Lichts (21) an benachbarten Codeelementen (100, 100').

## Beschreibung

Die Erfindung betrifft ein Verfahren zum Erfassen einer Absolutcodierung einer optischen Codespur nach dem Oberbegriff des unabhängigen Anspruchs.

Ein Absolutwertgeber ist ein Sensor zum Bestimmen von absoluten Positionen eines Objekts. Die Lage von Sensor und Objekt zueinander ist veränderlich. Der Sensor kann lineare Lageänderungen des Objekts erfassen und er kann rotierende Winkeländerungen des Objekts erfassen. Bekannt sind berührungslos arbeitende Sensoren, welche die Position des Objekts nach dem optischen- oder magnetischen Wirkungsprinzip bestimmen. Dazu erfasst ein Sensor eine Absolutcodierung einer Codespur und eine Auswerteeinheit wertet die erfasste Absolutcodierung aus und ermittelt daraus die Objektposition. Im Sinne der Erfindung ist die Absolutcodierung eine ortsaufgelöste Positionsangabe.

Absolutwertgeber werden vielfältig eingesetzt. Im Maschinen- und Anlagenbau bestimmen sie die Positionen von Maschinenelementen, wie von Antrieben, Schwenkköpfen, Drehtischen, usw. zu einem Referenzsystem. In geodätischen Geräten, wie in Theodoliten, Tachymetern, Laserscannern, usw. messen sie Horizontalwinkel und Vertikalwinkel zu entfernten Objekten. In Koordinatenmessgeräten erfassen sie räumliche Ausrichtungen von Roboterarmen, Lenkrädern, usw..

Im Folgenden wird der Spezialfall einer optischen Codespur betrachtet. Eine optische Codespur weist einen mechanischen Träger in Form einer Scheibe, eines Bandes, usw. auf. Fig. 1 zeigt dazu ein Beispiel aus dem Stand der Technik nach EP1890113A1. Auf dem mechanischen Träger der optischen Codespur 1 sind viele aneinander grenzende Codeelemente angeordnet, welche Codeelemente die Absolutcodierung 10 verkörpern. Im Sinne der Erfindung schreiben die in einer Spurrichtung angeordneten Codeelemente die eineindeutige Positionsangabe der Absolutcodierung von einem Codeelement zu einem nächsten angrenzenden Codeelement ortsaufgelöst fort. Die Codeelemente sind lichtdurchlässige Rechtecke, die in einem lichtundurchlässigen Restbereich angeordnet sind. Die optische Codespur 1 wird im Durchlichtprinzip mit Licht einer Lichtquelle beleuchtet. Die Codeelemente modulieren das Licht. Von den lichtdurchlässigen Rechtecken durchgelassenes Licht wird von einem Sensor entlang der Spurrichtung erfasst, von den lichtundurchlässigen Restbereichen nicht durchgelassenes Licht wird vom Sensor nicht erfasst. Die lichtdurchlässigen Rechtecke werden auf den Sensor als Schattenwurf abgebildet. Der Sensor erzeugt für erfasstes Licht Zustandssignale. Bei gegenseitiger Bewegung von optischer Codespur und Sensor erfasst der Sensor die Absolutcodierung als eine zeitliche diskrete Abfolge von diskontinuierlichen Hell-Dunkel-Übergängen.

Die Absolutcodierung weist entweder eine eineindeutige Positionsangabe oder einen eineindeutigen Code auf. Somit wird die Positionsangabe entweder aus den Zustandssignalen direkt ermittelt, oder dem Code des Zustandssignals wird durch Nachschlagen in einer Tabelle eine Positionsangabe zugeordnet. Da die Codeelemente und der Sensor eine räumliche Ausdehnung haben, kann zudem ein Schwerpunkt des Zustandsignals ermittelt werden, um die ermittelte Positionsangabe mit Subcodeelementgenauigkeit auf den Schwerpunkt des Codeelements zu beziehen. Im Sinne der Erfindung wird die Weite des Zustandssignals in Spurrichtung als Signalweite bezeichnet, und die Weite des Sensors in Spurrichtung wird als Sensorweite bezeichnet. Vom Schwerpunkt des Zustandsignals wird auf einen Schwerpunkt des Codeelements geschlossen. Und vom Schwerpunkt des Codeelements aus wird eine Distanz in Spurrichtung zu einer Referenzposition bestimmt. Somit liefert das Zustandssignal nicht nur eine eineindeutige Positionsangabe, sondern ermöglicht auch ein Bestimmen der Lage des Codeelements bezüglich einer Referenzposition.

Allerdings sind dem Fachmann alternativ zur Schwerpunktsbestimmung auch andere Methoden bekannt, mittels welcher die genaue Position des Codeelements anhand von der erfassten Codeprojektion ermittelt werden kann.

Das alles erfolgt, um die Position des Objekts mit hoher Genauigkeit zu bestimmen. So werden Positionen von Maschinenelementen mit einer Genauigkeit von 1µm bestimmt, und Theodolite messen Horizontalwinkel und Vertikalwinkel zu mehrere hundert Meter entfernten Objekten mit einer Genauigkeit von 0.lmgon. Um eine solch hohe Genauigkeit erreichen zu können, müssen systematische und nichtsystematische Fehler beim Bestimmen der Position des Objekts eliminiert werden.

Hochgenaue Absolutwertgeber weisen daher mehrere Sensoren auf, die in einer festen räumlichen Beziehung zueinander angeordnet sind und welche die Absolutcodierung der Codespur redundant erfassen. Durch Mittelwertbilden der redundant erfassten Absolutcodierung lassen sich nichtsystematische Fehler beim Bestimmen der Position des Objekts eliminieren.

Die verbleibenden systematischen Fehler beim Bestimmen der Position des Objekts sind oft harmonischer Natur. Solche harmonischen Fehler haben vielfältige Ursachen. So können sie von ungleichmäßig auf der Codespur angeordneten Codeelemente herrühren, oder durch Wärmeausdehnung der Codespur, Exzentrizität des mechanischen Trägers der Codespur, Lagerspiel des Absolutwertgebers, Beugungserscheinungen an Codeelementen, usw. verursacht werden. Auch stellen die feste räumliche Beziehung der Sensoren zueinander und die gleichmäßige Anordnung der Codeelemente der Codespur periodische Strukturen dar. Eine Überlagerung der periodischen Strukturen kann bei optischen Absolutwertgebern störende Moiré-Muster bilden. Zudem können nach dem Nyquist-Shannon-Abtasttheorem bei zu klein gewählter Abtastfrequenz des Absolutwertgebers bezüglich der Maximalfrequenz der Codeelemente Informationsverluste beim Erfassen der Absolutcodierung auftreten.

WO2011/064317A1 beschreibt hierzu ein Verfahren zum Ermitteln von Fehlerkoeffizienten und ein Verfahren zur Korrektur des Messwerts eines Absolutwertgebers mit diesen Fehlerkoeffizienten. Der Absolutwertgeber weist mindestens zwei Sensoren und eine optische Codespur auf. Die Sensoren und die optische Codespur sind zueinander beweglich. Die Sensoren erfassen die Absolutcodierung der optischen Codespur als Abfolge von Hell-Dunkel-Übergängen an unterschiedlichen Winkellagen. Die Sensoren sind in einem Winkel von zumindest 50 Grad voneinander beabstandet. Eine Auswerteeinheit ermittelt aus der von den Sensoren erfassten Absolutcodierung Winkelpositionswerte. Durch Vergleich der Differenz der Winkelpositionswerte der Sensoren für eine Vielzahl unterschiedlicher Winkellagen werden harmonische Winkelfehler in einer Fourier-Reihenentwicklung als Fehlerkoeffizienten dargestellt. Die Winkelpositionswerte werden mit diesen harmonischen Winkelfehlern korrigiert.

Eine erste Aufgabe der Erfindung besteht darin, ein verbessertes Verfahren zum Erfassen der Absolutcodierung einer optischen Codespur bereitzustellen.

Eine zweite Aufgabe der Erfindung besteht darin, eine optische Codespur und einen Absolutwertgeber zum Erfassen der Absolutcodierung der optischen Codespur bereitzustellen, welche zum hochgenauen Bestimmen des Objekts möglichst wenige Sensoren und/oder möglichst geringen Rechenaufwand benötigen.

Eine dritte Aufgabe der Erfindung besteht darin, ein Verfahren zum Herstellen einer optischen Codespur bereitzustellen, das kostengünstig mit bestehenden und bewährten Beschichtungstechniken kompatibel ist.

Eine weitere Aufgabe der Erfindung besteht darin, eine optische Codespur und einen Absolutwertgeber zum Erfassen der Absolutcodierung der optischen Codespur bereitzustellen, welche eine hohe Verfügbarkeit auch unter rauen Einsatzbedingungen aufweisen.

Zumindest eine dieser Aufgaben wird durch die kennzeichnenden Merkmale der unabhängigen Ansprüche gelöst.

Ein Aspekt der Erfindung betrifft ein Verfahren zum Erfassen einer Absolutcodierung, die Absolutcodierung wird durch Codeelemente einer optischen Codespur verkörpert, mit einem Beleuchten der Codeelemente mit Licht; mit einem Modulieren eines Teil des beleuchtenden Lichts an Codeelementen; mit einem Erfassen der Absolutcodierung als moduliertes Licht; und mit einem kontinuierlich variierenden Modulieren des Lichts an benachbarten Codeelementen.

Nun können beim Modulieren von Licht an einer optischen Codespur mit rechteckigen Codeelementen aus dem Stand der Technik nach EP1890113A1 Beugungserscheinungen auftreten, die zu Aliasing-Effekten führen können. Diese Aliasing-Erscheinungen führen zu quasi-stochastischen Fehlern beim Erfassen des modulierten Lichts. Die quasi-stochastischen Fehler wirken sich auch auf die Zustandssignale aus, die für erfasstes moduliertes Licht erzeugt werden und stören das Bestimmen des Schwerpunkts der Zustandsignale. Die Anmelderin hat herausgefunden, dass solche Beugungserscheinungen beim Erfassen von Licht, das an benachbarten Codeelementen mit kontinuierlicher Variation moduliert wird, vermindert auftreten. Benachtbarte Codeelemente sind ein erstes und ein zweites Codeelement, welche Codeelemente aneinander grenzen und die Absolutcodierung in einer Spurrichtung vom ersten Codeelement auf das zweite Codeelement fortschreiben. Der Begriff "kontinuierlich" wird im Sinne von mathematisch stetig verwendet, das Fortschreiben der Absolutcodierung erfolgt in einer stufenlosen Variation des beleuchtenden Lichts.

Durch Vermeiden von diskontinuierlichen Hell-Dunkel-Übergängen, wie sie an rechteckigen Codeelementen auftreten, werden Beugungserscheinungen vermindert, so dass auch erzeugte Zustandssignale weniger quasi-stochastische Fehler aufweisen. Erfindungsgemäss erfolgt also eine Verminderung von Fehlern. Während im Stand der Technik nach WO2011/064317A1 harmonische Fehler beim Erfassen einer Abfolge von Hell-Dunkel-Übergängen als Fehlerkoeffizienten entwickelt werden, und Winkelpositionswerte daraufhin um diese harmonischen Fehler korrigiert werden, setzt die Erfindung beim Erzeugen der quasi-stochastischen Fehler an und vermindert deren Quellen bzw. Auftreten.

Vorteilhafte Weiterbildungen der Erfindung ergeben sich aus den Merkmalen der abhängigen Ansprüche.

Ein weiterer Aspekt der Erfindung betrifft eine optische Codespur; welche optische Codespur einen mechanischen Träger, vorzugsweise in der Form einer Scheibe oder eines Bandes, aufweist; welcher mechanische Träger zumindest bereichsweise Codeelemente aufweist; mit benachbarten Codeelementen, die beleuchtendes Licht kontinuierlich variierend modulieren.

In einer speziellen Ausführungsform ist die Absolutcodierung als Aperturblende mit in Codespurerstreckungsrichtung ausgebildeter kontinuierlicher Variation von Codehöhen (also entlang der Codespurerstreckungsrichtung stetig variierenden Blendenöffnungsgrössen) verkörpert.

Es hat sich herausgestellt, dass eine Aperturblende eine Absolutcodierung verkörpern kann, mit Codeelementen, die kontinuierlich variierende Codehöhen aufweisen. Die Aperturblende besteht aus einzelnen Codeelementen, die in Spurrichtung angeordnet sind und unterschiedliche Breiten aufweisen.

Alternativ kann die Absolutcodierung auch als Punktraster mit kontinuierlicher Variation von Punktdichten von benachbarten Codeelementen verkörpert sein.

Auch hat sich herausgestellt, dass ein Punktraster eine Absolutcodierung verkörpern kann, mit Codeelementen, die kontinuierlich variierende Punktdichten aufweisen. Das Punktraster besteht aus einem Raster mit einer in Spurrichtung veränderlichen Dichte von dunklen Punkten auf hellem Untergrund.

Gemäss einer weiteren speziellen Ausführungsform ist die Absolutcodierung als Polarisator mit kontinuierlicher Variation von Polarisationseffizienzen von benachbarten Codeelementen verkörpert.

Zudem hat sich herausgestellt, dass ein Polarisator eine Absolutcodierung verkörpern kann. Ein Polarisator ist ein optisches Mittel, welches einen Polarisationszustand von Licht mit einer spezifischen Polarisationseffizienz verändert. Dabei wird zwischen einer Polarisation durch Streuung, einer Polarisation durch Reflexion, einer Polarisation durch Absorption und einer Polarisation durch Doppelbrechung unterschieden.

Noch ein weiterer Aspekt der Erfindung betrifft ein System zum Erfassen der Absolutcodierung der optischen Codespur; welches System einen Absolutwertgeber mit einem optischen Sensor aufweist; welcher Absolutwertgeber für erfasstes moduliertes Licht mindestens ein Zustandsignal erzeugt; welches Zustandssignal eine Signalweite aufweist, welche Signalweite kleiner als eine Sensorweite des Sensors ist.

Es ist bekannt, dass der Schwerpunkt des Zustandssignals nur dann mit minimalem Fehler ermittelt werden kann, wenn die Signalweite des Zustandssignals genau ein ganzzahliges Vielfaches der Sensorelelementweite (also des Pixelabstands) des Sensors beträgt. Sobald die Signalweite davon abweicht, kann der Schwerpunkt des Zustandssignals nur mit einem mehr oder weniger großen Fehler ermittelt werden. Der Fehler ist maximal, wenn die Signalweite des Zustandssignals eine halbe Sensorelelementweite vom ganzzahligen Vielfachen der Sensorelelementweite abweicht. Nun ist es praktisch und technisch nicht machbar, eine Signalweite zu erzeugen, die bei allen Einsatzbedingungen genau ein Vielfachen der Sensorelelementweite beträgt. So wird die Signalweite von sich verändernden Faktoren wie dem Abbildungsmaßstab, der Umgebungstemperatur, Produktionstoleranzen von optischer Codespur und Absolutwertgeber, usw. beeinflusst. Das Codeelement kann durch eine Linsenoptik auf den Sensor abgebildet werden, jede Linsenoptik ist mit einer Verzeichnung behaftet, die das Codeelement ortsabhängig mit unterschiedlicher Weite auf den Sensor abbildet, für welche Abbildung der Sensor ein Zustandssignal erzeugt.

Ein noch weiterer Aspekt der Erfindung betrifft ein Verfahren zum Herstellen der optischen Codespur, in dem ein mechanischer Träger der optischen Codespur bereitgestellt wird; auf welchen mechanischen Träger zumindest bereichsweise eine Beschichtung aufgetragen wird; in welcher Beschichtung Codeelemente strukturiert werden, welche Codeelemente beleuchtendes Licht modulieren; die Codeelemente werden derart strukturiert, dass beleuchtendes Licht an benachbarten Codeelementen mit einer kontinuierlich Variation moduliert wird.

Ein solches Herstellungsverfahren ist kostengünstig und mit bestehenden und bewährten Techniken kompatibel.

Weitere Vorteile und Merkmale der Erfindung sind aus der folgenden Beschreibung von derzeit bevorzugten Ausführungsformen im Zusammenhang mit den anhängenden

Figuren beispielhaft ersichtlich.
Figur 1 zeigt ein Beispiel einer optischen Codespur aus dem Stand der Technik;
Figur 2 zeigt schematisch einen Absolutwertgeber, der mit einem Sensor eine erfindungsgemäße optische Codespur erfasst und ein Zustandsignal an eine Auswerteeinheit kommuniziert;
Figur 3 zeigt im Querschnitt einen Teil einer ersten Ausführungsform einer optischen Codespur nach Figur 2 mit konstanter Dicke der Beschichtung in Spurrichtung;
Figur 4 zeigt im Querschnitt einen Teil der ersten Ausführungsform einer optischen Codespur nach Figur 3 mit konstanter Dicke der Beschichtung schräg zur Spurrichtung;
Figur 5 zeigt im Querschnitt einen Teil einer zweiten Ausführungsform einer optischen Codespur nach Figur 2 mit unterschiedlicher Dicke der Beschichtung in Spurrichtung;
Figur 6 zeigt im Querschnitt einen Teil der zweiten Ausführungsform einer optischen Codespur nach Figur 2 mit veränderlicher Dicke der Beschichtung schräg zur Spurrichtung;
Figur 7 zeigt in Ansicht einen Teil einer dritten Ausführungsform einer optischen Codespur nach Figur 2 mit einer Aperturblende als Absolutcodierung;
Figur 8 zeigt in Ansicht einen Teil einer vierten Ausführungsform einer optischen Codespur nach Figur 2 mit einem Punktraster als Absolutcodierung;
Figur 9 zeigt in Ansicht einen Teil einer fünften Ausführungsform einer optischen Codespur nach Figur 2 mit einer Aperturblende als Absolutcodierung;
Figur 10 zeigt in Ansicht einen Teil einer sechsten Ausführungsform einer optischen Codespur nach Figur 2 mit einer Aperturblende als Absolutcodierung beim Erfassen von an einem ersten Codeelement moduliertem Licht;
Figur 11 zeigt in Ansicht einen Teil der optischen Codespur nach Figur 10 beim Erfassen von an einem ersten Codeelement moduliertem Licht;
Figur 12 zeigt eine erste Ausführungsform eines einzelnen recheckigen Zustandssignals auf dem Sensor des Absolutwertgebers nach Figur 2;
Figur 13 zeigt den Fehler beim Bestimmen des Schwerpunkts des Zustandssignals nach Figur 12;
Figur 14 zeigt eine zweite Ausführungsform eines einzelnen glockenförmigen Zustandssignals auf dem Sensor des Absolutwergebers nach Figur 2;
Figur 15 zeigt den Fehler beim Bestimmen des Schwerpunkts des Zustandssignals nach Figur 14;
Figur 16 zeigt eine dritte Ausführungsform eines einzelnen rechteckigen Zustandssignals auf dem Sensor des Absolutwergebers nach Figur 2;
Figur 17 zeigt den Fehler beim Bestimmen des Schwerpunkts des Zustandssignals nach Figur 16;
Figur 18 zeigt eine vierte Ausführungsform eines mehrfachen rechteckigen Zustandssignals auf dem Sensor des Absolutwergebers nach Figur 2;
Figur 19 zeigt den Fehler beim Bestimmen des Schwerpunkts des Zustandssignals nach Figur 18;
Figur 20 zeigt eine fünfte Ausführungsform eines mehrfachen glockenförmigen Zustandssignals auf dem Sensor des Absolutwergebers nach Figur 2;
Figur 21 zeigt den Fehler beim Bestimmen des Schwerpunkts des Zustandssignals nach Figur 20;
Figur 22 zeigt schematisch das Erfassen von an Codeelementen der Absolutcodierung nach Figur 2 moduliertem Licht durch einen Absolutwergeber nach Figur 2 und das Bestimmen einer Objektposition durch die Auswerteeinheit nach Figur 2.

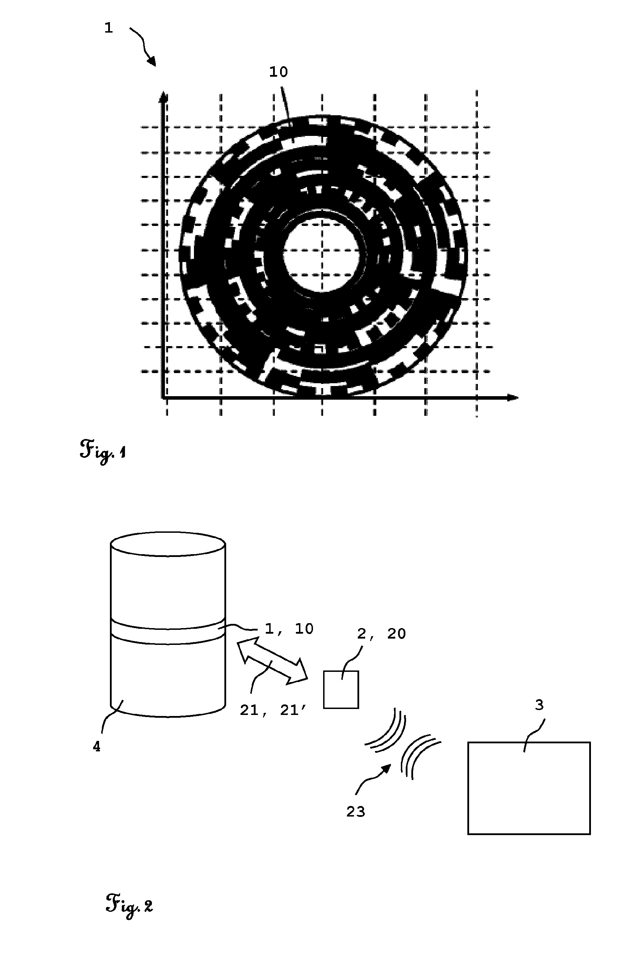

Figur 2 zeigt einen Absolutwertgeber 2, der mit einem optischen Sensor 20 eine Absolutcodierung 10 einer optischen Codespur 1 erfasst. Die optische Codespur 1 ist fest an einem Objekt 4 angeordnet. Sowohl die optische Codespur 1 als auch das Objekt 4 können beliebige Größe, Form und Gestalt aufweisen. Die optische Codespur 1 hat beispielsweise die Form einer Scheibe, eines Bandes, usw.. Durch Erfassen der Absolutcodierung 10 lässt sich eine Objektposition absolut bestimmen. Gemäß Fig.2 ist das Objekt 4 schematisch als Zylinder ausgebildet und die optische Codespur 1 ist bandförmig außenseitig am Umfang des Objekts 4 angeordnet und umschließt den Umfang vollständig. Der Absolutwertgeber 2 kommuniziert mit einer Auswerteeinheit 3. Die Lage des Absolutwertgebers 2 und der optischen Codespur 1 zueinander ist veränderlich.

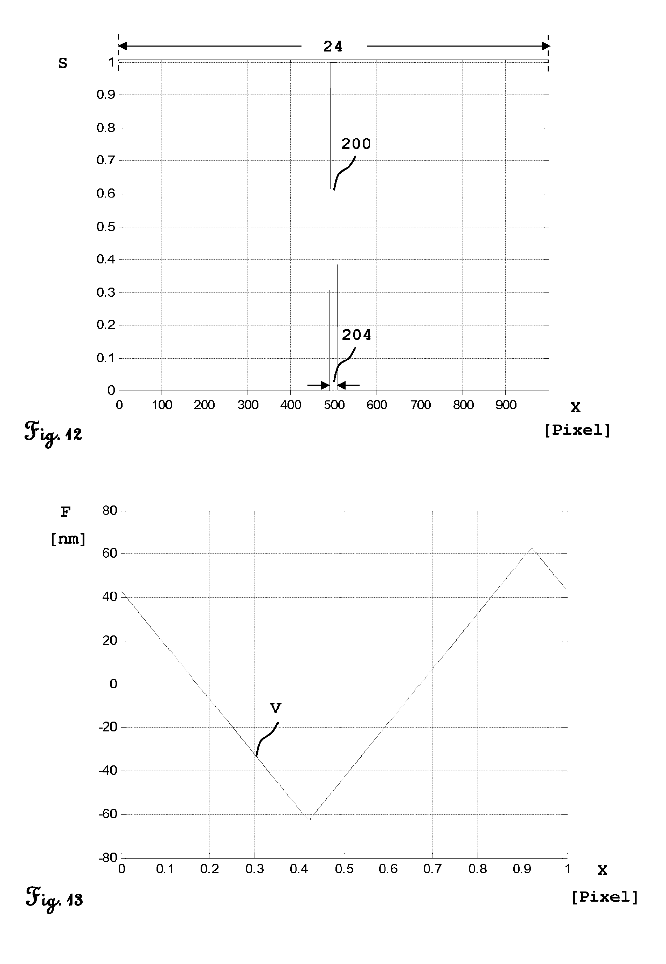

Der Absolutwertgeber 2 weist eine Lichtquelle auf, die Lichtquelle erzeugt Licht 21, welches Licht 21 die optische Codespur 1 beleuchtet. Das Licht 21 besteht aus elektromagnetischen Wellen wie Radiowellen, Mikrowellen, sichtbarem Licht, usw.. An Codeelementen 100, 100' der optischen Codespur 1 moduliertes Licht 21' wird vom optischen Sensor 20 erfasst. Mit dem Begriff "Modulation von Licht" wird im Sinne der Erfindung eine physikalische Wechselwirkung von Licht 21 mit Codeelementen 100, 100' der optischen Codespur 1 verstanden. Modulation von Licht umfasst die Streuung von Licht, die Reflektion von Licht, die Brechung von Licht, die Beugung von Licht, die Absorption von Licht, die Polarisation von Licht, usw.. Der optische Sensor 20 ist beispielsweise ein Register von Sensorelementen, wie ein Charge-Coupled Device (CCD), ein Complementary Metal Oxide Semiconductor (CMOS), usw.. Der Sensor weist dabei einzelne aneinander gereihte Photoempfangselemente auf, wobei die Sensorweite in X-Richtung (und für einen Flächenarray ggf. auch in Y-Richtung) in einer Anzahl der einzelnen Photoempfangselemente (Pixel) angegeben wird. Die X-Richtung ist die Sensor-Spurrichtung. Der optische Sensor 20 ist gemäß Figuren 12 bis 22 beispielsweise ein Zeilenarray mit 1000 Photoempfangselementen (Pixel) in X-Richtung. Erfindungsgemäss werden dabei durch die stetig variierende Modulation für die Code-Projektions-Erzeugung einzelne Empfangselemente des Sensors nicht nur entweder "gar nicht oder ganz" beleuchtet, sondern es entstehen viele verschiedene Zwischenwerte (Grauwerte) für die Beleuchtung von den einzelnen Empfangselementen (Pixel), wobei die Beleuchtungsstärke über den Verlauf der einzelnen Pixel entlang der Sensorzeile dann der kontinuierlich variierenden Modulation im Rahmen der Code-Projektion entspricht.

Der Absolutwertgeber 2 erzeugt für vom optischen Sensor 20 erfasstes moduliertes Licht 21' mindestens ein Zustandssignal 200 als von der erfassten Code-Projektion abhängiger Sensor-Output und kommuniziert dieses Zustandssignal 200 an die Auswerteeinheit 3. Details zum Zustandssignal 200 folgen in den Figuren 12 bis 24. Die Kommunikation 23 des Zustandssignals 200 kann beliebig erfolgen, insbesondere kann sie kabelgestützt, funkgestützt, usw. erfolgen. Bei Kenntnis der vorliegenden Erfindung kann der Fachmann den Absolutwertgeber mit im Gehäuse integrierter Auswerteeinheit als eine einzige Einheit ausführen.

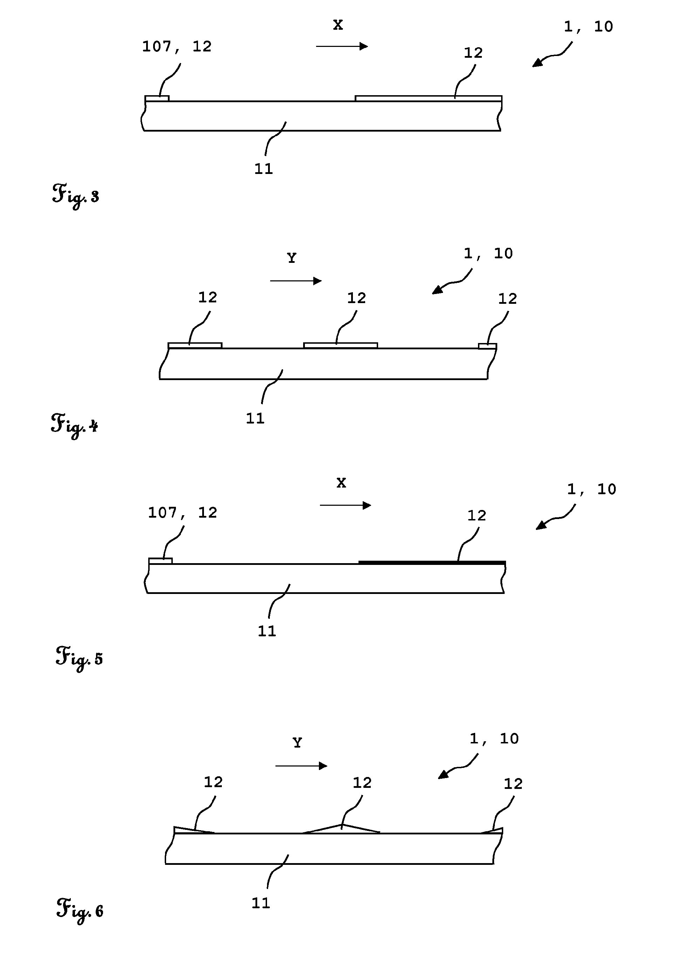

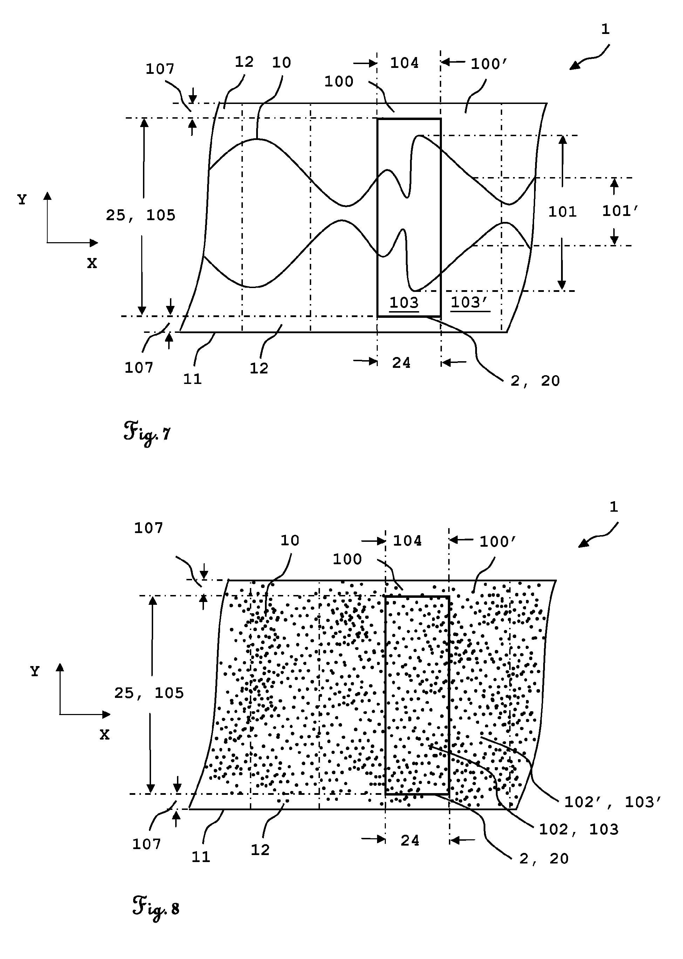

Die Figuren 3 bis 11 zeigen mehrere Ausführungsformen einer optischen Codespur 1. Die optische Codespur 1 weist z.B. einen mechanischen Träger 11 aus Glas, Kunststoff, Metall, usw. auf. Die Figuren 3 bis 6 zeigen die optische Codespur 1 im Querschnitt entlang der Spurrichtung (X-Richtung) und im Querschnitt in Y-Richtung quer zur Spurrichtung. Zumindest bereichsweise ist auf dem mechanischen Träger 11 z.B. eine Beschichtung 12 aus Chrom, Siliziumnitrid und Molybdän, usw. aufgetragen. Die Figuren 7 bis 11 zeigen die optische Codespur 1 in Ansicht. In der Beschichtung 12 sind beispielsweise zumindest bereichsweise photolithographisch, geätzt oder galvanisiert Codeelemente 100, 100' strukturiert. Die nach der Strukturierung unbedeckten Bereiche des mechanischen Trägers 11, die keine Beschichtung 12 mehr aufweisen, können für das Licht 21 z.B. zu mehr als 90%, insbesondere zu mehr als 98%, lichtdurchlässig sein. Die nach der Strukturierung bedeckten Bereiche des mechanischen Trägers 11, die weiterhin eine Beschichtung 12 aufweisen, sind für das Licht 21 z.B. zu mehr als 90%, insbesondere zu mehr als 98%, lichtundurchlässig, also opak. Wie in den Figuren 3 und 4 gezeigt, kann die Dicke der Beschichtung 12 der optischen Codespur 1 bereichsweise in X-Richtung und in Y-Richtung konstant sein. Beispielsweise ist die Beschichtung sowohl in einem Randbereich 107 als auch in einem mittleren Bereich 1µm dick, vorzugsweise 0.5µm dick, vorzugsweise 0.1µm, usw.. Wie in den Figuren 5 und 6 gezeigt, kann die Dicke der Beschichtung 12 aber auch für verschiedene Bereiche der optischen Codespur 1 unterschiedlich sein. Beispielsweise ist gemäß Figur 5 die Beschichtung 12 in X-Richtung im Randbereich 107 mit 0.6µm dicker als in mittleren Bereichen mit 0.2µm. Und gemäß Figur 6 kann die Dicke der Beschichtung 12 entlang der Y-Richtung kontinuierlich zwischen 0.1µm und 1.0µm variieren.

Das Erfassen des an den Codeelementen 100, 100' modulierten Lichts 21' erfolgt in Durchlicht oder Auflicht. Beim Durchlicht-Verfahren erfasst der optische Sensor 20 das durch unbedeckte Bereiche modulierte Licht 21', beim Auflicht-Verfahren erfasst der optische Sensor 20 das an bedeckten Bereichen modulierte Licht 21'. Bei der optischen Codespur 1 in der Ausführungsform gemäß den Figuren 7, 9, 10 und 11 wird moduliertes Licht 21' beispielhaft im Durchlicht-Verfahren erfasst (wobei dies - wie es dem Fachmann an sich bekannt ist - alternativ auch im Auflicht-Verfahren erfolgen kann). Bei der optischen Codespur 1 in der Ausführungsform gemäß der Figur 8 wird moduliertes Licht 21' beispielhaft im Auflicht-Verfahren erfasst (wobei auch hier alternativ wiederum - wie es dem Fachmann an sich bekannt ist - das Durchlicht-Verfahren angewendet werden kann).

Der optische Sensor 20 erfasst die Absolutcodierung 10 durch Lageänderung zueinander entlang der X-Richtung. Die die Absolutcodierung 10 verkörpernden Codeelemente 100, 100' können in X-Richtung eine konstante Codeelementweite 104 aufweisen und sie weisen in Y-Richtung eine konstante maximale Codeelementhöhe 105 auf. Die Größen der Codeelementweite 104 und der maximalen Codeelementhöhe 105 liegen im Bereich von einigen µm bis einigen cm. Benachbarte Codeelemente 100, 100' grenzen aneinander. Die Codeelemente 100, 100' sind in Y-Richtung mit dem Randabstand 107 zu einem Rand der optischen Codespur 1 angeordnet. Die Größe des Randabstands 107 ist konstant und liegt im Bereich von einigen µm bis einigen mm. Die Dimensionen des optischen Sensors 20 (bzw. des Abstands der einzelnen Pixel des Sensors) und der Codeelemente 100, 100' sind aufeinander abgestimmt. Eine Sensorweite 24 des optischen Sensors 20 entlang der X-Richtung ist größer als zwei Codeelementweiten 104 der Codeelemente 100, 100', sodass jeweils die auf dem Sensor erzeugte Code-Projektion eine Repräsentation von jeweils mindestens einem ganzen Codeelement 100, 100' enthält (ggf. kann die Codeelementweite im Verhältnis zur Sensorzeilenlänge (also zur Sensorweite) so gewählt werden, dass die Code-Projektion viele Pulse, die durch viele Codeelemente 100, 100' erzeugt werden, enthält). Eine Sensorhöhe 25 des optischen Sensors 20 (in Y-Richtung, mit anderen Worten also das Ausmass in Richtung quer zur Erstreckungsrichtung der Sensorzeile) kann dabei größer gewählt sein als die maximale Codeelementhöhe 105 der Codeelemente 100, 100'.

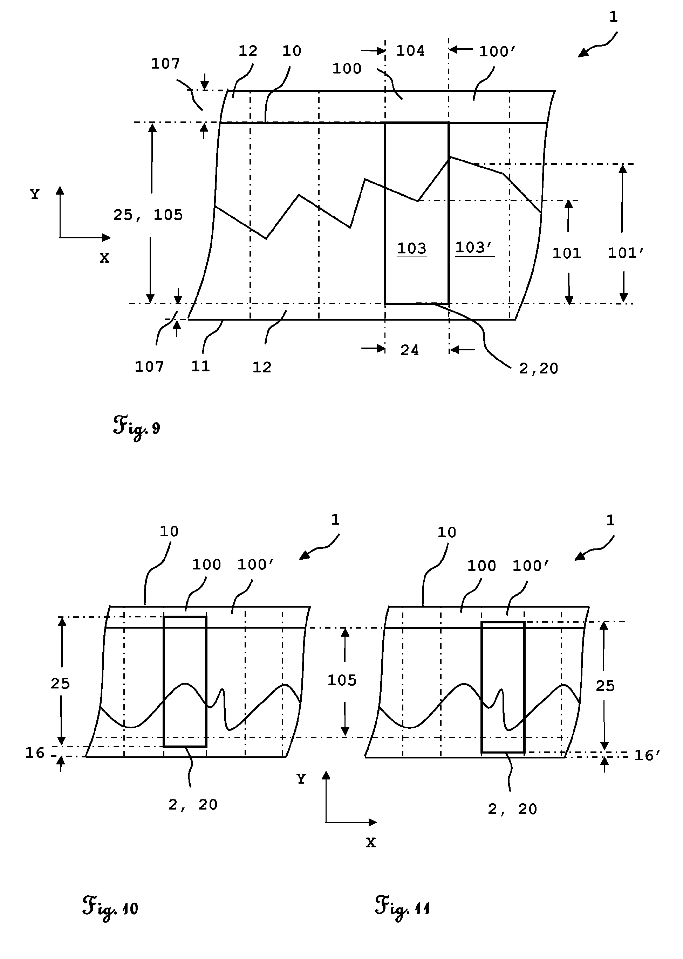

Die Figuren 7, 9, 10 und 11 zeigen verschiedene Ausführungsformen einer optischen Codespur 1 mit einer Aperturblende als Absolutcodierung 10. Während die Aperturblende aus Figur 7 eine doppelseitig stetig variierende Aperturblendenöffnung aufweist, zeigen die Figuren 9, 10 und 11 einseitig variierende Aperturblendenöffnungen. Die Beschichtung 12 ist also derart strukturiert, dass diese eine Aperturblende bildet.

Dabei ist der mechanische Träger 11 im Randbereich 107 der Codeelemente 100, 100' vollständig mit der Beschichtung 12 bedeckt; im mittleren Bereich der Codeelemente 100, 100' ist dabei eine Aperturblendenöffnung gebildet, die in ihrer Öffnungsgrösse (in der gezeigten Figur also die sich quer zur Codespurerstreckungsrichtung bemessene Höhe der Öffnung) in Codespurerstreckungsrichtung stetig, d.h. also kontinuierlich, variiert. Dabei ist der mechanische Träger 11 also nur bereichsweise mit Beschichtung 12 bedeckt. Gemäss der Figuren 7, 9, 10 und 11 weist jedes Codeelement 100, 100' einen einzigen zusammenhängenden von Beschichtung 12 unbedeckten Bereich auf. Codehöhen 101, 101' von benachbarten Codeelemente 100, 100' variieren kontinuierlich, also stetig, in Richtung der Codespurerstreckung. Durch die kontinuierliche Variation der Codehöhen 101, 101' wird beleuchtendes Licht 21 mit kontinuierlicher Variation moduliert. Die Codehöhe 101, 101' ist die vom Randbereich 107 aus gemessene Ausdehnung der Beschichtung 12 eines Codeelements 100, 100' in Y-Richtung. Die Codehöhe 101, 101' gibt somit die Begrenzung der Beschichtung 12 auf dem mechanischen Träger 11 an. Gemäß der Figuren 7, 10 und 11 weist die Aperturblende eine Begrenzung der Beschichtung 12 in Form von gebogener Aperturblendenabschnitte auf; gemäß Figur 9 weist die Aperturblende eine Begrenzung der Beschichtung 12 in Form von geradliniger Zackenabschnitte auf.

Die Figur 8 zeigt eine Ausführungsform einer optischen Codespur 1 mit einem Punktraster als Absolutcodierung 10. Die Punktdichte 102, 102' von benachbarten Codeelementen 100, 100' variiert kontinuierlich. Der mechanische Träger 11 ist sowohl im Randbereich 107 der Codeelemente 100, 100' als auch im mittleren Bereich der Codeelemente 100, 100' nur bereichsweise mit Beschichtung 12 in Form von Punkten bedeckt. Der von Beschichtung 12 unbedeckte Bereich kann zusammenhängend sein, er kann aber auch unzusammenhängend sein. Punktdichten 102, 102' von benachbarten Codeelementen 100, 100' variieren kontinuierlich. Durch die kontinuierliche Variation der Punktdichten 102, 102' wird beleuchtendes Licht 21 mit kontinuierlicher Variation moduliert. Die Punktdichte 102, 102' ist die pro Flächeneinheit im XY-Koordinatensystem gemessene Dichte an Punkten. Die Größe der Punkte kann für die gesamte optische Codespur 1 konstant sein, wie 10µm, 5µm, usw.; die Größe der Punkte kann aber auch für verschiedene Bereiche der optischen Codespur 1 unterschiedlich sein, wie in einem ersten Bereich 5µm, in einem zweiten Bereich 6µm, usw..

Die Ausführungsformen einer optischen Codespur 1 gemäß der Figuren 3 bis 11 lassen sich auch mit einem Polarisator als Absolutcodierung 10 realisieren, welcher Polarisator einen Polarisationszustand des Lichts 21 mit einer spezifischen Polarisationseffizienz 103, 103' verändert, so dass die Polarisationseffizienz 103, 103' von benachbarten Codeelementen 100, 100' kontinuierlich variiert. Durch die kontinuierliche Variation der Polarisationseffizienz 103, 103' wird beleuchtendes Licht 21 mit kontinuierlicher Variation moduliert. Dabei wird zwischen einer Polarisation durch Streuung, einer Polarisation durch Reflexion, einer Polarisation durch Absorption und einer Polarisation durch Doppelbrechung unterschieden. Polarisation durch Streuung, Absorption und Doppelbrechung lässt sich mit den Ausführungsformen gemäß der Figuren 7, 9, 10 und 11 realisieren. Polarisation durch Reflexion lässt sich mit der Ausführungsform gemäß Figur 8 realisieren. Gemäß der Figuren 7, 9, 10 und 11 ist die Polarisationseffizienz 103, 103' eine spezifische Funktion der Codehöhe 101, 101'; gemäß Figur 8 ist die Polarisationseffizienz 103, 103' eine spezifische Funktion der Punktdichte 102, 102'. Darüber hinaus kann die Polarisationseffizienz 103, 103' auch über die Dicke der Beschichtung 12, die Art der Materialien der Beschichtung 12 und des mechanischen Trägers 11, usw. variiert werden.

Die Figuren 10 und 11 zeigen ein beispielhaftes Erfassen der Absolutcodierung 10 an zwei benachbarten Codeelementen 100, 100'. Der optische Sensor 20 erfasst gemäß Figur 10 moduliertes Licht 21' von einem ersten Codeelement 100 und gemäß Figur 11 erfasst der optische Sensor 20 moduliertes Licht 21' von einem zweiten Codeelement 100'. Die optische Codespur 1 hat beispielsweise einen mechanischen Träger 11 in der Form einer Scheibe, welche Scheibe in Y-Richtung eine durch den Herstellungsprozess bedingte Exzentrizität 16, 16' aufweist. Die Exzentrizität 16, 16' äußert sich darin, dass gemäß Figur 10 ein unterer Rand der optischen Codespur 1 weiter vom optische Sensor 20 entfernt ist als gemäß Figur 11, dementsprechend ist die Exzentrizität 16 beim ersten Codeelement 100 größer als die Exzentrizität 16' beim zweiten Codeelement 100'. Der optische Sensor 20 weist eine Sensorhöhe 25 entlang der Y-Richtung auf, die größer als die Codeelementhöhe 105 der Codeelemente 100, 100' ist, um so Exzentrizitäten 16, 16' der optischen Codespur 1 bezüglich der Y-Richtung zu kompensieren und zu vermeiden, dass Codeelemente 100, 100' unvollständig erfasst werden.

Für einen genauen Abgleich der Codeelemente 100, 100' zum Sensor 20 kann zu jedem Zustandsignal 200 eine Position (z.B. in Form eins definierten Hauptpunkts oder eines Schwerpunkts 301 des Zustandssignals 200) ermittelt werden.

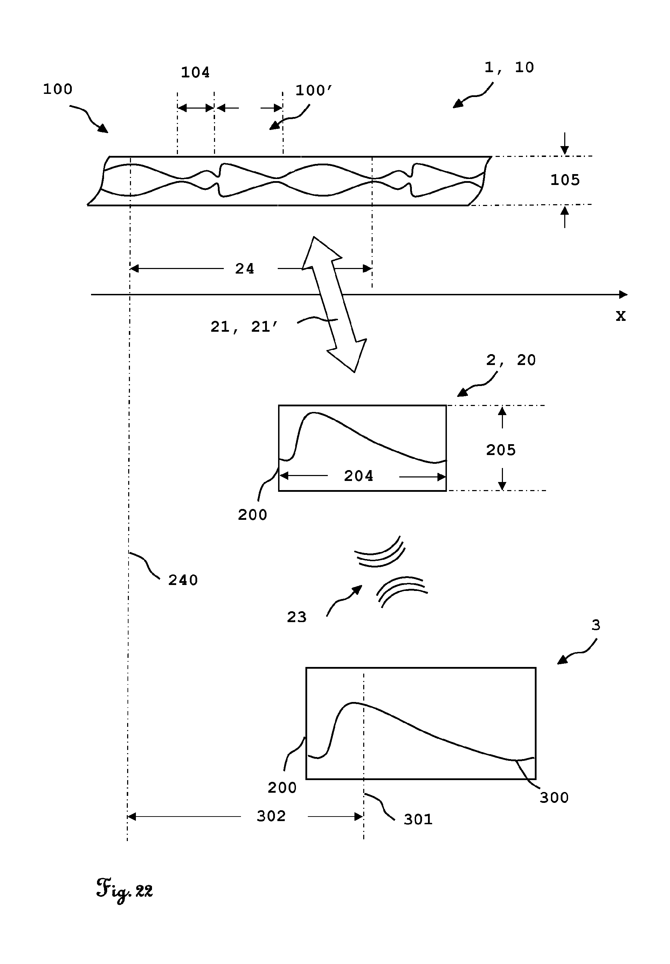

Mit Hilfe der Position (z.B. des Haupt- oder Schwerpunkts 301) wird eine Distanz 302 eines Codeelements 100 zu einer Referenzposition 240 des Sensors 20 bestimmt. Details dazu sind in Figur 22 dargestellt. Dabei beeinflussen die Gestalt der Codeelemente 100, 100' und des Sensors 20 die Genauigkeit beim Bestimmen der Schwerpunkte 301 der Zustandsignale 200. Die Figuren 12 bis 23 zeigen wie ein Fehler F beim Bestimmen der Positionen der Zustandssignale 200 von der Signalweite 204 der Zustandsignale 200 und dem Pixelabstand der einzelnen Erfassungselemente des Sensors 20 abhängt. Die Figuren 12, 14, 16, 18, 20 und 22 zeigen die Zustandssignale 200 und die Figuren 13, 15, 17, 19, 21 und 23 zeigen die Fehler F. Die Ordinate der Figuren 12, 14, 16, 18, 20 und 22 ist eine auf Eins normierte Signalstärke S, die die einzelnen Erfassungselemente (Pixel) des die Code-Projektion erfassenden Sensors ausgeben; die Abszisse der Figuren 12, 14, 16, 18, 20 und 22 ist die X-Richtung (also Erstreckungsrichtung) des Sensors. Der Sensor 20 besteht beispielsweise aus einem Zeilenarray mit 1000 in X-Richtung nebeneinander angeordneten Sensorelementen. Alle 1000 Sensorelemente bilden die Sensorweite 24. Die Ordinate der Figuren 13, 15, 17, 19, 21 und 23 ist der Fehler F; die Abszisse der Figuren 13, 15, 17, 19, 21 und 23 ist die X-Richtung. Der Fehler F beim Bestimmen der Schwerpunkte 301 der Zustandssignale 200 ist mehr oder weniger abhängig von einer Schwerpunktsverschiebung V. Die Schwerpunktsverschiebung V wird durch quasi-stochastische Fehler hervorgerufen bzw. simuliert.

Figur 12 zeigt ein einzelnes rechteckiges Zustandsignal 200. Ein rechteckiges Zustandsignal 200 wird für erfasstes Licht erzeugt, das an rechteckigen Codeelementen, wie diese aus dem Stand der Technik bekannt sind, moduliert worden ist. Das Zustandsignal 200 hat z.B. eine Signalweite 204 von Fünfzehn plus ein Halb Pixel. Die Signalweite 204 ist ein nichtganzzahliges Vielfaches des Pixelabstands. Figur 13 zeigt den Fehler F für eine derartige Wahl von Signalweite 204 im Verhältnis zum Pixelabstand für das Erfassen eines rechteckigen Zustandsignals. Die Schwerpunktsverschiebung V erfolgt im Bereich von Null bis einem Ganzen Pixel. Der Fehler F weist aufgrund dessen, dass das Zustandsignal rechteckig ist und die Signalweite kein ganzzahliges Vielfaches des Pixelabstandes bildet, einen sägezahnartigen Verlauf im Bereich von -60nm bis +60nm auf; die Standardabweichung des Fehlers F beträgt 36nm.

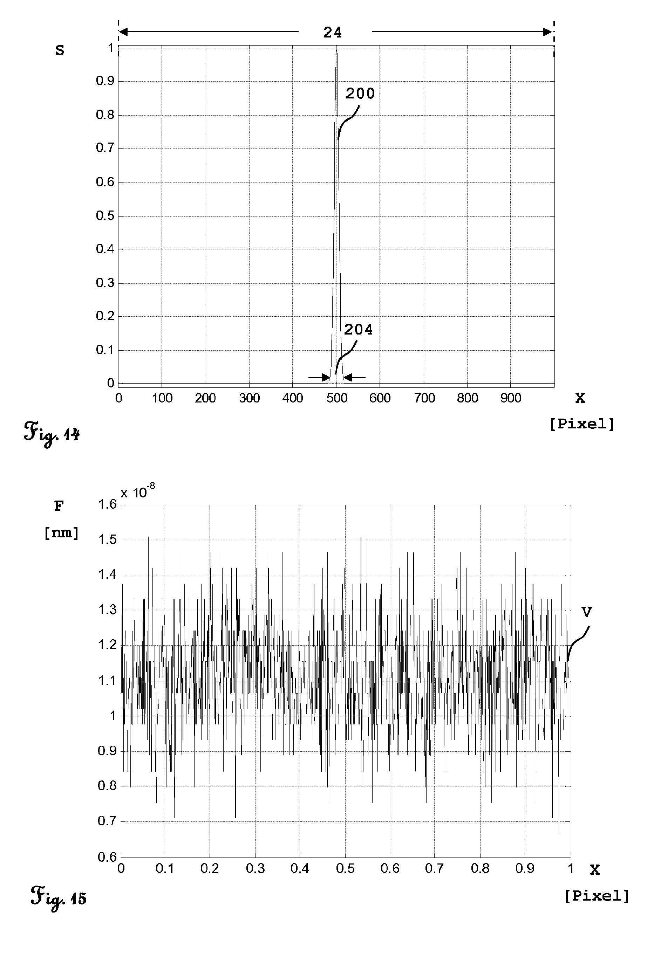

Figur 14 zeigt ein einzelnes glockenförmiges Zustandsignal 200. Ein glockenförmiges Zustandsignal 200 wird für erfasstes Licht 21' erzeugt, das an erfindungsgemässen Codeelementen 100, 100' (also kontinuierlich variierend) moduliert worden ist, welche erfindungsgemässe kontinuierliche Variation zu geringen Beugungserscheinungen und wenigen quasi-stochastischen Fehlern im Zustandssignal 200 führt. Das Zustandsignal 200 hat eine Signalweite 204 von z.B. Fünfzehn plus ein Halb Pixel. Die Signalweite 204 ist ein nichtganzzahliges Vielfaches des Pixelabstands. Figur 15 zeigt den Fehler F in nm für eine derartige Wahl von Signalweite 204 im Verhältnis zum Pixelabstand. Die Schwerpunktsverschiebung V erfolgt im Bereich von Null bis einem Ganzen Pixel. Der Fehler F ist aufgrund des glockenförmigen Zustandsignals lediglich ein Rauschen im Bereich von 0.7*10⁻⁸nm bis 1.5*10⁻⁸nm; die Standardabweichung des Fehlers F beträgt 1.1*10⁻⁸nm.

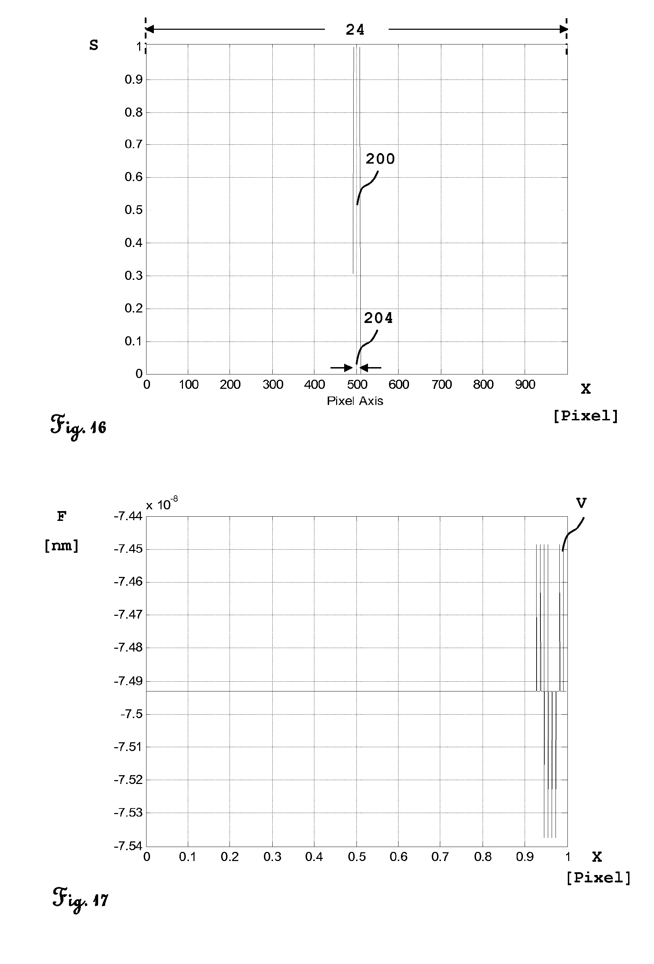

Figur 16 zeigt ein einzelnes rechteckiges Zustandsignal 200 mit einer Signalweite 204 von Fünfzehn Pixel. Die Signalweite 204 ist ein ganzzahliges Vielfaches der Sensorelemente. Figur 17 zeigt den Fehler F für ein solches Verhältnis von Signalweite 204 gegenüber Pixelabstand. Die Schwerpunktsverschiebung V erfolgt im Bereich von Null bis einem Ganzen Pixel. Der Fehler F ist ein Rauschen und schwankt im Bereich von -7.54*10⁻⁸nm bis -7.44*10⁻⁸nm; die Standardabweichung des Fehlers F beträgt -7.49*10⁻⁸nm.

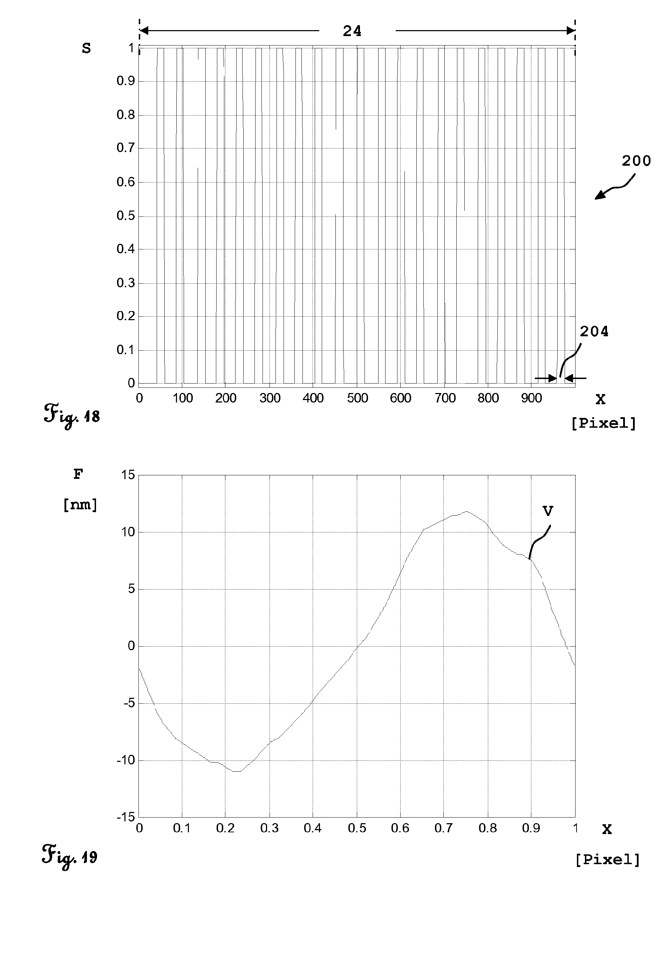

Figur 18 zeigt ein mehrfaches rechteckiges Zustandsignal 200 mit unterschiedlicher Signalweite 204 im Bereich von Vierzehn plus ein Halb Pixel bis Fünfzehn plus ein Halb Pixel. Der Fehler F für ein derartiges Verhältnis von Signalweite 204 gegenüber dem Pixelabstand ist in Figur 19 zu sehen. Auch hier erfolgt die Schwerpunktsverschiebung V im Bereich von Null bis einem Ganzen Pixel. Die Schwerpunktsverschiebung V zeigt einen abgerundeten sägezahnartigen Verlauf und schwankt im Bereich von -11nm bis +llnm; die Standardabweichung des Fehlers F beträgt 7.9nm.

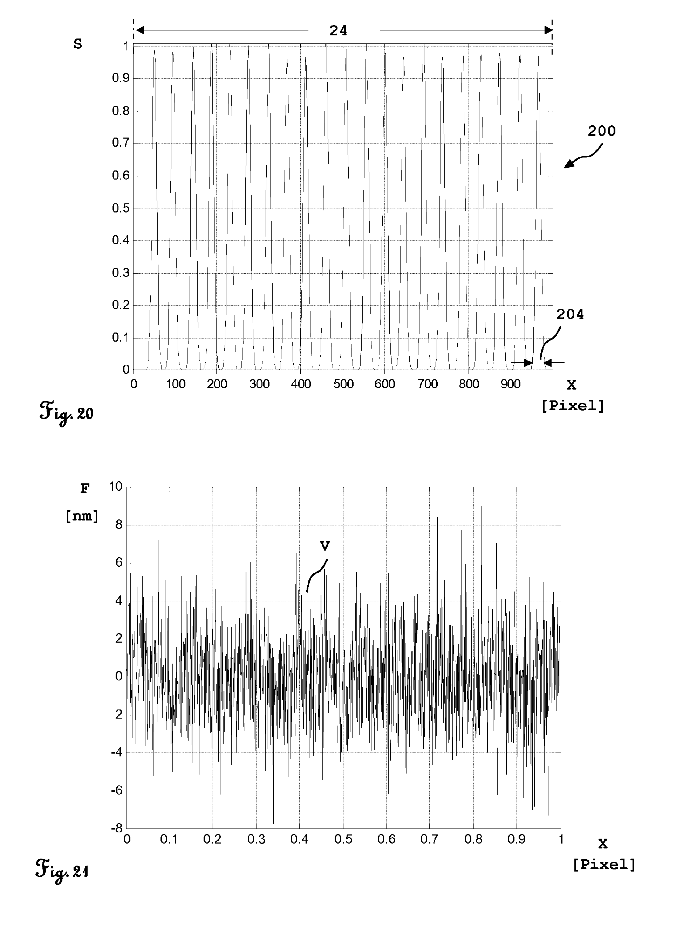

Figur 20 zeigt ein durch erfindungsgemässe stetig variierende Modulation generiertes mehrfaches glockenförmiges Zustandsignal 200 mit unterschiedlicher Signalweite 204 im Bereich z.B. von Vierzehn plus ein Halb Pixel bis Fünfzehn plus ein Halb Pixel. Der Fehler F für eine solche Konfiguration des Codes (nämlich sodass die Signalweite 204 über den Verlauf des Codes in Codespurrichtung unterschiedlich breit ist und beispielhaft zwischen Vierzehn plus ein Halb und Fünfzehn plus ein Halb Pixel variiert) ist in Figur 21 zu sehen. Auch hier erfolgt die Schwerpunktsverschiebung V im Bereich von Null bis einem Ganzen Pixel. Die Schwerpunktsverschiebung V ist ein Rauschen und schwankt im Bereich von -7nm bis +9nm; die Standardabweichung des Fehlers F beträgt 2.4nm.

Figur 22 zeigt das Erfassen von an einem Codeelement 100' der optischen Codespur 1 moduliertem Licht 21' durch den Absolutwertgeber 2. Für erfasstes moduliertes Licht 21' wird durch den Absolutwertgeber 2 ein Zustandssignal 200 erzeugt. Das Codeelement 100' wird somit als Zustandsignal 200 (d.h. also als Code-Projektion) auf einen Sensor 20 des Absolutwertgebers 2 abgebildet und durch den Sensor 20 erfasst. Das Zustandssignal 200 wird an die Auswerteeinheit 3 kommuniziert. Die Auswerteeinheit 3 weist einen Mikroprozessor und einen computerlesbaren Datenspeicher auf. Zum Auswerten des Zustandssignals 200 wird ein Computerprogrammprodukt aus dem computerlesbaren Datenspeicher (der sich entweder lokal in der Auswerteeinheit 3 befinden oder auch extern situiert und über das Internet verbunden sein kann) in den Mikroprozessor der Auswerteeinheit 3 geladen und ausgeführt. Die Auswerteeinheit 3 kann ein ortsfester Computer wie ein Personalcomputer (PC), eine Platine mit einem Mikrocomputer mit einer programmierbaren Logik oder, oder ein mobiler Computer wie ein Laptop, Smartphone, usw. sein. Der erfindungsgemässe Programmcode kann also im Rahmen eines Computerprogrammprodukts, das auf einem maschinenlesbaren Träger gespeichert ist, oder eines Computer-Daten-Signals, verkörpert durch eine elektromagnetische Welle, vorliegen, wobei der Programmcode geeignet ist aus einer von dem oben beschriebenen erfindungsgemässen System erfassten Absolutcodierung 10 der optischen Codespur 1 die Objektposition zu ermitteln, wenn das Programm in den Mikroprozessor der Auswerteeinheit 3 geladen und ausgeführt wird. Die Auswerteeinheit 3 ermittelt zum kommunizierten Zustandssignal 200 eine Positionsabgabe 300. Das Zustandssignal 200 weist entweder eine eineindeutige Positionsangabe oder einen eineindeutigen Code auf. Somit wird die Positionsangabe entweder direkt aus dem Zustandssignal 200 ermittelt, oder dem Code des Zustandssignals 200 wird durch Nachschlagen in einer digitalen Tabelle eine Positionsangabe zugeordnet. Die digitale Tabelle ist ebenfalls im computerlesbaren Datenspeicher gespeichert und in den Mikroprozessor der Auswerteeinheit 3 ladbar. Auch bestimmt die Auswerteeinheit 3 eine Position (z.B. in Form eines Schwerpunkts 301) des kommunizierten Zustandssignals 200 und bestimmt eine Distanz 302 vom Schwerpunkt 301 zu einer Referenzposition 240 des Absolutwertgebers 2. Die Objektposition wird somit absolut aus der Summe der Positionsabgabe 300 und der Distanz 302 bestimmt.

Es versteht sich, dass diese dargestellten Figuren nur mögliche Ausführungsformen schematisch darstellen. Die verschiedenen Ansätze können ebenso miteinander sowie mit Verfahren und Geräten des Standes der Technik kombiniert werden.

## Patentansprüche

1. Verfahren zum Erfassen einer Absolutcodierung (10), wobei die Absolutcodierung (10) durch
Codeelemente (100, 100') einer Codespur (1) verkörpert wird, mit einem
Beleuchten der Codeelemente (100, 100') mit Licht (21); Modulieren eines Teil des beleuchtenden Lichts (21) an Codeelementen (100, 100'), und
Erfassen der Absolutcodierung (10) als moduliertes Licht (21'),
**gekennzeichnet durch**
ein kontinuierlich variierendes Modulieren des Lichts (21) an benachbarten Codeelementen (100, 100').

2. Optische Codespur (1) zur Verwendung im Verfahren nach Anspruch 1, **dadurch gekennzeichnet,**
**dass** die optische Codespur (1) einen mechanischen Träger (11), insbesondere in der Form einer Scheibe oder eines Bandes, aufweist;
**dass** der mechanische Träger (11) zumindest bereichsweise Codeelemente (100, 100') aufweist; und dass benachbarte Codeelemente (100, 100') beleuchtendes Licht (21) kontinuierlich variierend modulieren.

3. Optische Codespur (1) nach Anspruch 2, **dadurch gekennzeichnet,**
**dass** die Absolutcodierung (10) als Aperturblende mit kontinuierlicher Variation von Codehöhen (101, 101') von benachbarten Codeelementen (100, 100') verkörpert ist.

4. Optische Codespur (1) nach Anspruch 2, **dadurch gekennzeichnet,**
**dass** die Absolutcodierung (10) als Punktraster mit kontinuierlicher Variation von Punktdichten (102, 102') von benachbarten Codeelementen (100, 100') verkörpert ist.

5. Optische Codespur (1) nach Anspruch 2, **dadurch gekennzeichnet,**
**dass** die Absolutcodierung (10) als Polarisator mit kontinuierlicher Variation von Polarisationseffizienzen (103, 103') von benachbarten Codeelementen (100, 100') verkörpert ist.

6. Optische Codespur (1) nach Anspruch 5, **dadurch gekennzeichnet,**
**dass** ein Polarisator verwendet wird,
der Licht (21) streut; oder
der Licht (21) reflektiert, oder
der Licht (21) absorbiert, oder
der Licht (21) doppelt bricht.

7. Optische Codespur (1) nach Anspruch 6, **dadurch gekennzeichnet,**
- **dass** die Beschichtung (12) zumindest bereichsweise eine konstante optische Dichte, insbesondere eine konstante Dicke, aufweist,
und/oder
- **dass** die Beschichtung (12) zumindest bereichsweise eine variierende optische Dichte, insbesondere eine variierende Dicke, aufweist.

8. Optische Codespur (1) nach einem der Ansprüche 2 bis 7, **dadurch gekennzeichnet,**
**dass** die Codeelemente (100, 100') eine konstante Codeelementweite (104) haben und/oder
**dass** die die Codeelemente (100, 100') eine konstante Codeelementhöhe (105) haben.

9. System zur Verwendung im Verfahren nach einem der Ansprüche 1 bis 8,
**dadurch gekennzeichnet,**
**dass** das System einen Absolutwertgeber (2), insbesondere einen Absolutwinkelgeber oder einen Absolut-Linearpositionsgeber, mit einem optischen Sensor (20) aufweist;
**dass** der Absolutwertgeber (2) eine optische Codespur (1) nach einem der Ansprüche 1 bis 8 aufweist; dass der Sensor (20) zur Erfassung des an benachbarten Codeelementen (100, 100') mit kontinuierlicher Variation modulierten Lichts (21') ausgebildet ist; und dass - anhand eines durch den Sensor (20) bei der Erfassung des Lichts erzeugten Ausgangssignals - durch den Absolutwertgeber (2) ein Absolutlagewert, insbesondere ein Absolutwinkel bzw. eine absolute Linearposition, abgeleitet wird.

10. System nach Anspruch 9, **dadurch gekennzeichnet,**
**dass** eine Sensorweite (24) des Sensors (20) groß oder größer als eine Summe von einer Codeelementweite (104) und von einem Codeelementabstand (106) der Codeelemente (100, 100') ist.

11. System nach Anspruch 9 oder 10, **dadurch gekennzeichnet, dass** eine Sensorhöhe (25) des Sensors (20) groß oder größer als eine Codeelementhöhe (105) der Codeelemente (100, 100') ist.

12. System nach Anspruch 11, **dadurch gekennzeichnet, dass** die optische Codespur (1) eine Exzentrizität (16, 16') aufweist; und
dass die Sensorhöhe (25) des Sensors (20) gleich groß oder größer ist als eine Summe aus
- der maximalen Codeelementhöhe (105) der Codeelemente (100, 100') und
- einem maximalen, durch die Exzentrizität (16, 16') der optischen Codespur (1) in unterschiedlichen Lagen bewirkten Höhenversatz von Code-Projektion relativ zum Sensor (20).

13. Verfahren zum Herstellen der optischen Codespur (1) nach einem der Ansprüche 1 bis 8, mit den Schritten:
dass ein mechanischer Träger (11) der optischen Codespur (1) bereitgestellt wird;
dass auf den mechanischen Träger (11) zumindest bereichsweise eine Beschichtung (12) aufgetragen wird; und
dass in der Beschichtung (12) Codeelemente (100, 100') strukturiert werden, welche Codeelemente (100, 100') beleuchtendes Licht (21) modulieren, **dadurch gekennzeichnet,**
**dass** die Codeelemente (100, 100') derart strukturiert werden, dass beleuchtendes Licht (21) an benachbarten Codeelementen (100, 100') mit einer kontinuierlichen Variation moduliert wird.

14. Verfahren zum Herstellen der optischen Codespur (1) nach einem der Ansprüche 1 bis 8, mit den Schritten:
dass ein mechanischer Träger (11) der optischen Codespur (1) bereitgestellt wird;
dass auf den mechanischen Träger (11) zumindest bereichsweise diffraktive Strukturen als die optische Codespur (1) erzeugt werden; und
dass in den diffraktiven Strukturen Codeelemente (100, 100') strukturiert werden, welche Codeelemente (100, 100') beleuchtendes Licht (21) modulieren, **dadurch gekennzeichnet,**
**dass** die Codeelemente (100, 100') derart strukturiert werden, dass beleuchtendes Licht (21) an benachbarten Codeelementen (100, 100') mit einer kontinuierlichen Variation moduliert wird.

15. Computerprogrammprodukt, das auf einem maschinenlesbaren Träger gespeichert ist, oder Computer-Daten-Signal, verkörpert durch eine elektromagnetische Welle, mit Programmcode, der geeignet ist aus einer von einem System nach einem der Ansprüche 9 bis 12 erfassten Absolutcodierung (10) einer optischen Codespur (1) eine Objektposition zu ermitteln, wenn das Programm in einen Mikroprozessor einer Auswerteeinheit (3) geladen und ausgeführt wird.
